# EUROPEAN PATENT APPLICATION

(11) **EP 2 762 363 A1**
(43) Date of publication of application: **06.08.2014**
(21) Application number: 13153482.8
(22) Date of filing: 31.01.2013
(51) Int. Cl.: B60R 1/00

(54) **Vehicle safety and monitoring system**

(71) Applicant: Delphi Technologies, Inc., Troy, MI 48007 (US)
(72) Inventor: Tupinier, Laurent, 67116 Reichstett (FR); Etienne, Stephane, 67400 Illkirch (FR)
(74) Representative: Neill, Andrew Peter

(57) **Abstract**

A self-contained monitoring system comprising a module which is adapted to be attached to, or is integral with, the internal roof of a vehicle. The module may include cameras and a display (9) adapted to display e.g. images of drivers (6) and passengers (7) to each other. The monitoring system may include various sensors and be adapted to control vehicle functions. Various functionality can be incorporated, including remote connectivity and means to detect intruders.

## Description

### Technical Field

This invention relates to vehicle safety and monitoring systems.

### Background of the Invention

In order to increase vehicle safety, it is known to use vehicle mounted cameras which may, for example, scan the road (e.g. forward) in order to detect pedestrians, road signs and/or any potential dangers in the vicinity of the vehicle. It is further known for this purpose to locate miniature cameras in the external roof area of a vehicle.

Recent years has seen the introduction of a plethora of devices and systems, adapted for vehicles and their drivers, which provide information, cues or other signals to the driver. These include navigation systems, and mobile phone systems as well as devices which deliver emails or SMS alerts. Unfortunately, the introduction of such systems has increased driver distraction.

Monitoring systems are also known which monitor driver behaviour, such as those adapted to detect drowsiness and driver alcohol levels. These system devices are typically placed around the steering wheel periphery. This can cause problems as they are cumbersome, restrictive and awkward from a driver perspective.

Furthermore, in general, the positioning of any cameras or image displays in vehicles can also be far from ideal. Camera systems may supply a restricted range or directivity of vision. Display screens are often located in far-from-ideal positions, requiring the driver to substantially divert his gaze from the road and forward vision. Furthermore each, of said monitoring systems typically requires their own dedicated unit.

It is an object to overcome such problems. It is further object to provide a safety and monitoring system having increased functionality and which is less restrictive and safer to user from a vehicle driver perspective. It is an object of the invention to provide a monitoring system which is easy to fit, self-contained and makes intelligent use of space.

### Summary of the Invention

In one aspect of the invention is provided a monitoring system for a vehicle comprising a monitoring module, adapted to be located to, or integral with, the interior roof of a vehicle.

The module may include at least one camera. The monitoring system may be self-contained within said module.

Preferably the camera(s) are directed to capture the image of any of the driver, front, and/or backseat passenger(s). Preferably the system includes at least one display located towards the front of the module to display images to the driver and/or front- seat passenger, and/or at least one display located towards the rear of the module so as to display images to the back-seat passengers.

The front-mounted display may be adapted to display one or more of the following to the driver or front seat passenger : diagnostics, safety information, images of the rear seat passengers.

The monitoring system is preferably adapted to capture images of the driver and/or front-seat passenger and display these to the occupants of the rear seats, and vice versa.

The monitoring system may have remote connectivity, so as to be adapted to wirelessly transmit or receive data, signals and/or instructions. It may have means to detect intrusion into the vehicle. The system may include at least one motion sensor and/or heat detection sensor.

The monitoring system may be adapted to transmit or receive signals and/or monitoring data to or from a central location, private address, user equipment, hand-held device or key fob. The system may include means to record, store or transmit images.

The module may be adapted to receive signals or data from one or more of the following sensors or devices: rain sensor, light sensor, temperature sensor, garage sensor, emergency switch, alarm, switch roof acquisition, mobile phone, microphone, alarm system, alcohol sensor, or key fob. One or more of said sensors or devices may be contained within, or is integral with, the module.

The monitoring system may have means to operatively connect to, or control, vehicle systems and functionality. The module may be adapted, when connected, to control one or more of any of the following vehicle or remote devices, or receive signals or data therefrom: air bag(s), seat belts, vehicle lights or lighting, locking systems, window mechanisms, in-car entertainment system, horn, vehicle roof light, sunroof, garage access systems.

The module may include a sloped and or widened portion towards the front thereof. The sloped or widened portion includes a display adapted for view by the driver or front passenger.

The monitoring system may be adapted to implement specific action(s) as a consequence of monitoring and detecting specific conditions. The actions are preferably prioritised.

The monitoring system may be attached to or located in the internal roof space of the vehicle or integral with it.

By locating a monitoring system in a substantially self-contained module in the vehicle internal roof space/area, it advantageously allows an autonomous monitoring system to be provided which uses space intelligently and furthermore can provide display means for appropriate viewing by both drivers and passengers in an ergonomic way.

### Brief Description of the Drawings

The present invention will now be described, by way of example, with reference to the accompanying drawings, in which:
Figures 1a and 1b show schematic views showing the general location of roof-based monitoring system according to one aspect.
Figure 2 shows an elevational side view of a roof-based mounted monitoring system.
Figure 3 shows schematic circuitry of a printed circuit board (PCB) which can be used in a roof-based monitoring system.
Figure 4 shows a schematic diagram of the central unit of a roof-based monitoring system showing functionality.

### Description of the Preferred Embodiments

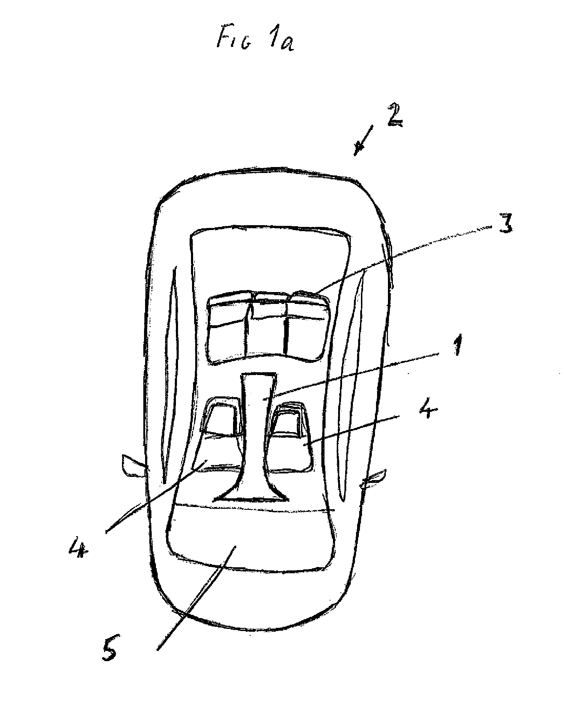

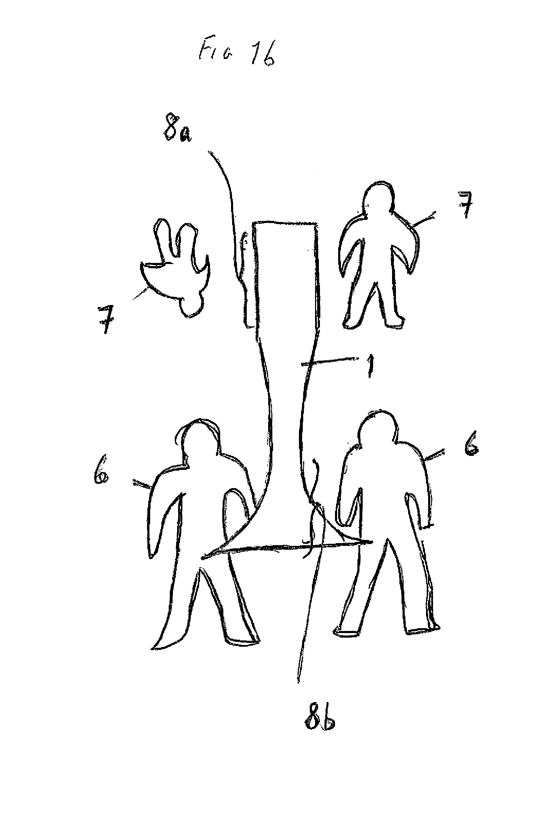

Figures 1a and 1b show schematic representations of a roof-based monitoring system 1 according to one aspect. Figures 1a and 1b show plan views of showing the location of the system in relation to the driver, front seat passenger, and rear seat passengers. The monitoring system comprises a monitoring module 1. In the example, the module is elongated in form and is located on the inner roof area of a vehicle 2; the module may be attached to or be integral with the vehicle roof. To show the positioning of the module, figure 1a shows rear seats 3 and front seats 4, and the dashboard/windscreen 5; figure 1b shows the positions of front seat passenger and driver 6, and rear seat passengers 7. The module includes a rear portion 8a and a front portion 8b, functionally connected. Both the front and the rear portions include cameras directed to capture internal images from within the vehicle, in particular images of the driver, front passenger, and/or rear passenger. In addition, the front and rear portions also include displays located also in the front and rear portion so as to display images to the driver, front seat passenger and/or the rear seat passenger(s).

As can be seen from figure 1, in plan-view, the module is elongate and convex in form, such that it widens towards the front portion so as to provide a widened area at the front end for the driver and/or front passenger display screen. In this way, the driver (and/or front seat passenger) can be provided with a display which is offset from the central axis of the module, and more towards the driver's (or front seat passenger's) forward vision.

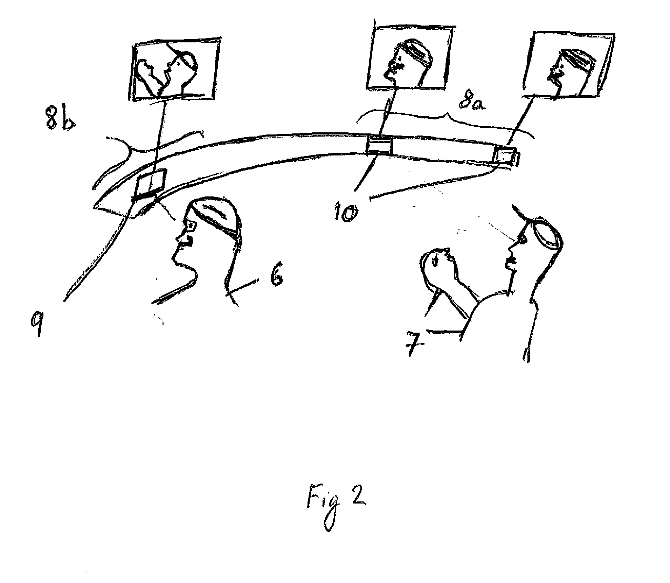

Figure 2 shows a preferred example of the invention in side view. As can be seen, the module is curved downwards towards the front end. Again this is so as to not only conform to the shape of the vehicle roof but also provides the driver with a front display screen 9 which is at a more convenient viewing angle, not substantially vertically away from his forward field of vision. In other words, the front display is located toward the front portion of the module such that when fitted, the display is located in the driver's forward view of vision.

The roof-based module includes displays 10 located in the rear portions of the module. In addition cameras (not shown) are suitably located in both portions so as to capture images of the driver/front seat passenger and rear seat passengers respectively. When located on the inner roof of the car, the module allows occupants in the rear seat (for example children) to be observed by the driver and/or front seat passenger, and vice versa. A particular advantage is that it allows children at the rear of the car to be supervised without the driver or front seat passenger having to avert his gaze from the front view, i.e. with minimal effort. The system can be used to monitor and observe children or detect dangerous situations. In addition, children in the rear seat can view images of the driver and front passenger (e.g. their parents) for the purpose of comforting and reassuring children.

Preferably, the front located driver display is located so that the driver (and/or front seat passenger) does not have to substantially divert his gaze from the front i.e. the road ahead.

In one example, all the processing functionality used by the monitoring unit, such as that to operate cameras and displays, process images etc., is contained within the same module, so that the module is an autonomously functioning self-contained unit.

In alternative and/or further aspects of the invention, various further functionality is included in the module. The monitoring module may be integrated with or contain an in-vehicle entertainment, e.g. music system, as well as provide mobile communication facilities, personal computing facilities and such like to deliver Internet access, emails, SMS, MMS and such like.

The monitoring module may also provide security features, have remote connectivity, and also be adapted to actuate vehicle systems and actuators such as locks and the horn.

The monitoring modules may also receive various inputs from sensors. In addition, the unit preferably includes processor functionality which has hitherto been located elsewhere. These examples will be described in more detail hereinafter.

By having a monitoring system comprising a module located in the inner roof region of a vehicle, intelligent use can be made of unutilised space.

In a preferred example, by having camera, displays and processing requirement located in the same module, the module can be assembled to the vehicle quickly and efficiently and furthermore can be retrofitted to existing vehicles. Furthermore, as mentioned, such a roof mounted module allows the driver/ other front seat passengers to have visual communication with the rear occupants, and vice versa.

In a further aspect, the monitoring system/monitoring module may incorporate security features, so as to, for example, monitor unattended vehicles against intrusion or burglary. The camera(s) located in the roof-based monitoring module can be utilised for this purpose. In an example, the roof module detects motion, hot bodies within the vehicle, by motion or infra-red sensors. The module may contain intrusion monitoring functionality such as the ability to notify the owner or others of intrusion, or facilities to record intrusion activity, such as for example by using a camera installed in the roof module. The monitoring system module may include features such as providing alerts of intrusion, alarm(s) or recording means which can be used for evidential purposes.

In a preferred example, the module includes remote connectivity capability, such that alerts, images or any other information can be transmitted wirelessly from the vehicle to a security centre, police station, personal residence (e.g. vehicle owner's home) or to a personal device such as a mobile phone, laptop device or key fob.

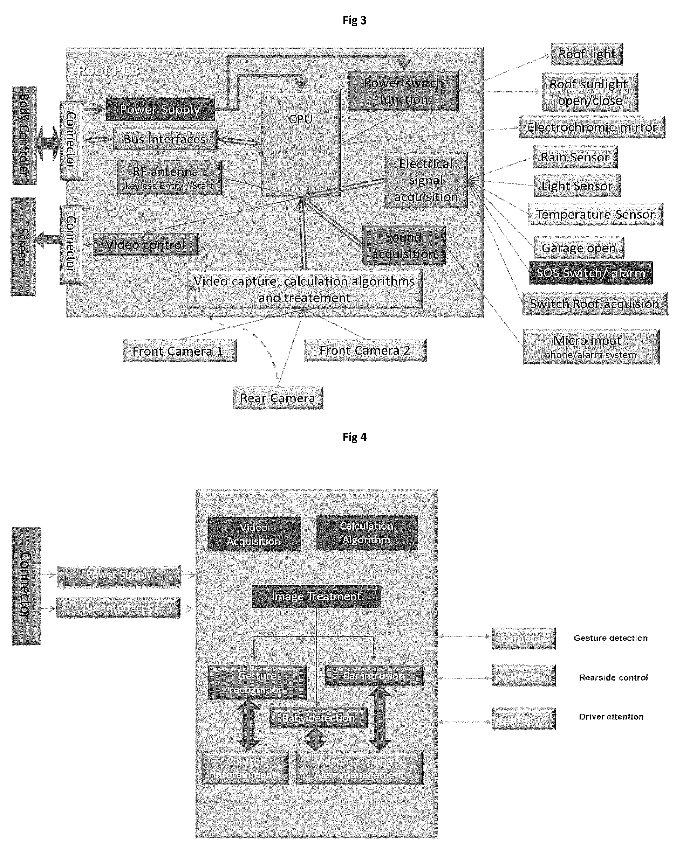

Figure 3 shows a schematic circuitry of a printed circuit board (PCB) which can be incorporated, according to one aspect, into the monitoring module. The PCB includes a CPU and a power supply connected to a power switch function. The power switch function can operate roof light and/or the sunroof. In one embodiment the roof light and sunroof are integral with the monitoring module.

The CPU is connected to an electrical signal acquisition module and sound acquisition unit which are adapted to receive input or signals from one or more of the following sensors or signals: rain sensor, light sensor, temperature sensor, garage open sensor/signal, SOS switch/alarm, switch roof acquisition (switches which allow lighting in the roof area, reading light, main light), phone signal/connection, and/or microphone or alarm system.

The PCB or monitoring module in general has an input from front and rear cameras, and includes a functionality which can capture/process/store images or video signals from the cameras and provide the required image processing algorithms. The PCB also includes functionality to control the operation of any screens or displays in the monitoring module. Both these functionalities may be provided by separate processors (e.g. chips) or be performed by the CPU.

The PCB or monitoring module in general may also provide functionality (not shown) that enables the module to have connectivity with remote stations/devices (RF transmitter/receivers means).

The PCB or monitoring module in general may also be provided with connection means which can connect with the vehicle (body) systems. This may include the vehicle power supply so as to provide power to the module. In addition, the PCB or monitoring module in general may have functionality so as to control various vehicle systems so as to allow the monitoring module to operate systems such as the vehicles lights or lighting, horn, alarm systems, windows, door locking systems, entertainment systems. The CPU may have connectivity with the vehicle's keyless entry or keyless start system. The PCB/roof module may have means to electrically connect to such vehicles systems or alternatively, the PCB/roof module may communicate via short distance wireless means e.g. by Bluetooth.

The roof-based monitoring system may incorporate a range of other functionality. The monitoring module which embodies the system may have connectivity to the vehicle GPS system or include a GPS system. In this way GPS data can be used to provide navigation data and/or disclose a vehicle's location. In this way the monitoring module will effectively include the functionality of satellite navigation systems. The GPS data may alternatively be analysed by the monitoring module to determine if the vehicle is driving too fast for the zone it is driving through. In response, the monitoring module may alert the driver to such an event through one of its display or by audio means. The GPS positioning may be used to transmit position data (preferably with an alarm) to personal devices or remote locations such as the police, possibly with a picture of the scene.

Figure 4 shows the general functionality of a central unit of the roof-based monitoring system The monitoring module may include processing functionality, such as image processing functionality that allows gesture recognition, baby detection and such like.

The roof based monitoring system may also incorporate any other functionality, such as detectors to detect the driver's alcohol level. In one example the monitoring module has image processing functionality to determine facial expressions so as to detect problems with infants or driver drowsiness. Again, as a consequence of detecting such evens, any appropriate visual or audio alarms may be activated.

The roof-based monitoring system may be connected and/or communicate with vehicle systems wirelessly. The skilled person would readily be aware that such communication could be implemented by Bluetooth and such like.

Cameras, as well as image processing, recording of video, display of the images/information, or sending of alarm may be managed in real time.

The roof-based system (module) may also be provided with a pre-programmed set of instructions such that, as a consequence of monitored events, specific actions are implemented. The table below illustrates a number of such monitored events and actions relating to various scenarios, which are implemented by the monitoring module. The table illustrates six scenarios. In the first row of each scenario (task order 1) is shown an existing state of the vehicle and monitoring system, the fourth and fifth columns showing the state or what is displayed by the front driver display and rear passenger display respectively. The event column shows what type of event may occur and third column shows whether there is a detection or action by the roof-based monitoring system (module), as specified e.g. by the displays. The sixth column indicates what action is taken by the vehicle (systems). Of course this action may be dictated to the vehicle by the monitoring system.

In this way the module can implement specific action(s) as a consequence of monitoring and detecting specific conditions. These actions may be prioritised.

| **Task Order** | **Event** | **Mon. System** | **Driver Display** | **Rear passenger Display** | **Action by the vehicle system** |
|---|---|---|---|---|---|
| 1 | | | GPS | Off | |
| 2 | Problem concerning child passenger (suffocation/cry) | Detection | | | |
| 3 | | Action | Child/rear passenger | Driver | |
| 1 | | | Off | Off | |
| 2 | Locking of vehicle | | | | |
| 3 | Detection of the presence of children in the vehicle | Detection | | | |
| 4 | | Action | Message alert | Message alert | Alarm/warnings/horn |
| 1 | | | Off | Off | Lock vehicle |
| 2 | Intrusion in the vehicle | Detection | | | |
| 3 | | Action | | | Record image intrusion |
| 4 | | Action | Intrusion alert | Intrusion alert | Alarm/warnings/horn |
| 1 | | | GPS | Film | |
| 2 | Detect Drowsiness of the Driver | Detection | | | |
| 3 | | Action | Message alert | Message alert driver | |
| 4 | | Action | | | Warnings |
| 1 | | | Rear Passenger | Driver | |
| 2 | GPS alert (travelling to fast/zone with caution) | Detection | | | |
| 3 | | Action RIMS | message alert GPS | message for the driver regards driving | |
| 1 | | | Rear Passenger | Film/Off | |
| 2 | Sunroof opened | | | | |
| 3 | Detect Child discomfort from the sun | Detection | | | |
| 4 | | Action | Display message sunroof open/child discomfort | driver | |

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A monitoring system for a vehicle comprising a monitoring module, adapted to be located to, or integral with, the interior roof of a vehicle.

2. A monitoring system as system as claimed in claim 1, wherein said module including at least one camera.

3. A monitoring system as system as claimed in claim 1 wherein said monitoring system is self-contained within said module.

4. A monitoring system as claimed in claim 1 or 2 wherein said camera(s) are directed to capture the image of any of the driver, front, and/or backseat passenger(s).

5. A monitoring system as claimed in any preceding claim which includes at least one display located towards the front of the module to display images to the driver and/or front- seat passenger, and/or at least one display located towards the rear of the module so as to display images to the back-seat passengers.

6. A monitoring system as claimed in any preceding claim wherein the front-mounted display is adapted to display one or more of the following to the driver or front seat passenger : diagnostics, safety information, images of the rear seat passengers.

7. A monitoring system adapted to capture images of the driver and/or front-seat passenger and display these to the occupants of the rear seats, and vice versa.

8. A monitoring system for a vehicle as claimed in any preceding claim which has remote connectivity, so as to be adapted to wirelessly transmit or receive data, signals and/or instructions.

9. A monitoring system for a vehicle as claimed in any preceding claim having means to detect intrusion into the vehicle.

10. A monitoring system for a vehicle as claimed in claim 9 including at least one motion sensor and/or heat detection sensor.

11. A monitoring system as claimed in any preceding claim wherein said module is adapted to transmit or receive signals and/or monitoring data to or from a central location, private address, user equipment, hand-held device or key fob.

12. A monitoring system as claimed in any preceding claim including means to record, store or transmit images.

13. A monitoring system as claimed in any preceding claim wherein said module is adapted to receive signals or data from one or more of the following sensors or devices: rain sensor, light sensor, temperature sensor, garage sensor, emergency switch, alarm, switch roof acquisition, mobile phone, microphone, alarm system, alcohol sensor, or key fob.

14. A monitoring system as claimed in claim 13 wherein one or more of said sensors or devices is contained within, or is integral with, the module.

15. A monitoring system as claimed in any preceding claim having means to operatively connect to, or control, vehicle systems and functionality.

16. A monitoring system as claimed in any preceding claim 15 wherein said module is adapted, when connected, to control one or more of any of the following vehicle or remote devices, or receive signals or data therefrom: air bag(s), seat belts, vehicle lights or lighting, locking systems, window mechanisms, in-car entertainment system, horn, vehicle roof light, sunroof, garage access systems.

17. A monitoring system as claimed in any preceding claim wherein the module includes a sloped and or widened portion towards the front thereof.

18. A monitoring system as claimed in claim 17 wherein said sloped or widened portion includes a display adapted for view by the driver or front passenger.

19. A monitoring system as claimed in any preceding claim adapted to implement specific action(s) as a consequence of monitoring and detecting specific conditions.

20. A monitoring system for a vehicle as claimed in claim 19 wherein said actions are prioritised.

21. A vehicle including a monitoring system as claimed in any previous claim attached to or located in the internal roof space of the vehicle or integral with it.

22. A method of monitoring a vehicle and/or its occupants comprising utilising a monitoring system as claimed in any of claims 1 to 21.
